# EUROPÄISCHE PATENTSCHRIFT

(11) **EP 0 875 066 B1**
(45) Veröffentlichungstag und Bekanntmachung des Hinweises auf die Patenterteilung: **17.07.2002**
(21) Anmeldenummer: 97900975.0
(22) Anmeldetag: 09.01.1997
(51) Int. Cl.: H01F 1/06, G11B 5/706

(54) **FERROMAGNETISCHE PIGMENTE**
FERROMAGNETIC PIGMENTS
PIGMENTS FERROMAGNETIQUES

(30) Priorität: 17.01.1996 DE 19601412
(43) Veröffentlichungstag der Anmeldung: 04.11.1998
(73) Patentinhaber: EMTEC Magnetics GmbH, 67059 Ludwigshafen (DE)
(72) Erfinder: POGANIUCH, Peter, D-67434 Neustadt (DE); SCHWAB, Ekkehard, D-67434 Neustadt (DE); DAUSCH, Wilma, M., D-67117 Limburgerhof (DE); KÖRNER, Reinhard, D-67227 Frankenthal (DE); WIMBERSKY, Werner, D-67063 Ludwigshafen (DE)
(74) Vertreter: Ricker, Mathias, Dr.Dipl.-Chem.
(86) Internationale Anmeldenummer: EP9700062
(87) Internationale Veröffentlichungsnummer: WO9726666

(56) Entgegenhaltungen:
- US-A- 4 933 004
- US-A- 5 466 306
- PATENT ABSTRACTS OF JAPAN vol. 017, no. 656 (M-1521), 6.Dezember 1993 & JP 05 214413 A (NISSAN CHEM IND LTD), 24.August 1993,

## Beschreibung

Die vorliegende Erfindung betrifft phosphorhaltige ferromagnetische, insbesondere einen im wesentlichen aus Eisen und Cobalt bestehenden Kern enthaltende Pigmente, ein Verfahren zu deren Herstellung, deren Verwendung in magnetischen Aufzeichnungsmaterialien sowie magnetische Aufzeichnungsmaterialien, die solche Pigmente enthalten.

Mit zunehmender Speicherdichte magnetischer Aufzeichnungsmaterialien werden immer höhere Anforderungen an die in diesen Materialien zu verwendenden Pigmenten gestellt. Wegen der im Vergleich zu oxidischen Materialien höheren spezifischen Magnetisierung haben sich für die hochdichte magnetische Aufzeichnung (z.B. im V8-System) metallische Eisenpartikel, die gegebenenfalls auch mit Nickel oder Cobalt dotiert sein können, durchgesetzt. Neben guten magnetischen Eigenschaften sind aber vor allem die Länge sowie das Volumen der Pigmentpartikel von herausragender Bedeutung. Das Signal/Rausch-Verhältnis eines magnetischen Aufzeichnungsmaterials nimmt proportional zur Wurzel der Anzahl der in einem Volumenelement enthaltenen Partikel ab (Finn Jorgensen, The complete Handbook of Magnetic Recording, 3. Ed., Tob Books Inc., Summit 1988). Des weiteren ist bekannt, daß die durchschnittliche Partikellänge der in einem magnetischen Aufzeichnungsmaterial eingesetzten Partikel 1/3 der Aufzeichnungswellenlänge nicht überschreiten darf, ohne daß es zu Signalverlusten kommt (Auweter et al., IEEE, Vol. 27(1991),4669-4671). Magnetpartikel für das 8 mm Video-System mit einer Aufzeichnungswellenlänge von 0,58 µm dürfen daher durchschnittlich nicht länger als 195 nm sein, solche für das Hi8-System (0,4 µm Aufzeichnungswellenlänge) nicht länger als 130 nm. Für neue, digital hochdicht aufzeichnende Videosysteme werden Partikel mit einer Länge zwischen 50 und 100 nm benötigt. Für die hochdichte magnetische Aufzeichnung werden also feinteilige und kurze Magnetpartikel benötigt, die dennoch über eine hohe Koerzitivkraft verfügen und gut dispergierbar sein müssen. Je feinteiliger aber Magnetpartikel sind, desto schwieriger ist eine homogene Dispergierung (Jorgensen, a.a.O., S. 310). Es kommt in hohem Maße darauf an, daß die Partikel nicht versintert sind und die Partikeloberfläche viele Ankergruppen für die Dispergierhilfsmittel aufweist, damit eine homogene Dispersion der Partikel im Bindemittelsystem ermöglicht wird. Ferromagnetische Eisenpigmente sind bekannt und werden u.a. durch Reduktion nadelförmiger, mit einer Cobaltverbindung beschichteter Eisenoxidverbindungen, wie z.B. der Oxide oder Oxidhydroxide, insbesondere Eisen-(III)-oxidhydroxide wie α-FeOOH, mit Wasserstoff oder anderen gasförmigen Reduktionsmitteln erhalten.

Die guten magnetischen Eigenschaften solcher Pigmente beruhen im wesentlichen auf der Formanisotropie der Teilchen, d.h. der Nadelform der Teilchen. Um den bei der Umwandlung der nadelförmigen, mit einer Cobaltverbindung beschichteten Eisenoxidverbindungen auftretenden Formverlust so gering wie möglich zu halten und Versinterungen zu vermeiden, werden die Teilchen vor dieser Umwandlung mit einem formstabilisierenden Überzug versehen.

Nach der Lehre von DE-A 39 11 039 können beispielsweise nadelförmige cobalthaltige, ferromagnetische Eisenpigmente erhalten werden, die jedoch nachteiligerweise eine Länge von 250 bis 500 µm aufweisen und für die hochdichte magnetische Aufzeichnung unbrauchbar sind.

Die Synthese des α-FeOOH kann nach dem sogenannten sauren Verfahren erfolgen (DE-A 36 03 431). Hierbei wird von einer wäßrigen Eisen-(II)-Salzlösung ausgegangen, der gegebenenfalls noch weitere Ionen zugesetzt werden (DE-A 32 43 868). Durch den Zusatz dieser Fremdionen läßt sich die Geometrie der FeOOH-Teilchen beeinflussen. Zu Beginn der Synthese wird ein Teil der Eisen-(II)-Ionen mit Lauge ausgefällt. Anschließend erfolgt die Oxidation z.B. durch Einleiten von Luft, zu α-FeOOH. Die dabei freiwerdenden Protonen werden zunächst durch den sich auflösenden Eisen-(II)-Hydroxid-Niederschlag abgefangen, so daß der pH-Wert nicht unter 5 sinkt. Hat sich der Eisen-(II)-Hydroxid-Niederschlag vollständig aufgelöst, tritt ein starker Abfall des pH-Werts ein und die Bildung von α-FeOOH kommt praktisch zum Erliegen. Diesen ersten Teil bezeichnet man als Keimphase. Die nun noch in Lösung befindlichen Eisen-(II)-Ionen werden anschließend mit einem Oxidationsmittel, z.B. Luft, unter gleichzeitiger Zugabe von Lauge zu Eisen-(III) oxidiert, welches auf den vorhande nen Keimen aufwächst (Wachstumsphase). Nach beendeter Synthese wird das α-FeOOH mit einer Cobaltverbindung beschichtet (DE-A 39 11 039). Anschließend werden die Teilchen mit einem formstabilisierenden Überzug versehen. Hierzu wurde die Verwendung von Phosphaten (US-A 4 305 753), Phosphaten und Boraten (DE-A 27 43 298), Phosphaten und Zink (DE-A 36 03 431), Erdalkaliverbindungen in Verbindung mit Carbonsäuren (DE-A 24 34 096) sowie Verbindungen des Siliziums und/oder Aluminiums (EP-A 56 257, DE-A 30 44 772, US-A 4 133 677) vorgeschlagen. Im Anschluß daran erfolgt üblicherweise zunächst eine Entwässerung von beschichtetem α-FeOOH zu beschichtetem α-Fe₂O₃. Die Reduktion der daraus resultierenden Teilchen erfolgt üblicherweise mittels gasförmiger Reduktionsmittel, meist Wasserstoff (US-A 2 879 154).

Die gemeinsame Beschichtung mit Silizium und Aluminium ist besonders vorteilhaft, da das Pigment dadurch mit einer keramischen Schutzschicht umhüllt wird. Des weiteren sind auf diese Art an der Oberfläche sowohl saure Si-OH-, als auch basische Al-OH-Gruppen vorhanden, so daß saure, wie auch basische Dispergierhilfsmittel gut mit der Oberfläche wechselwirken können.

Andererseits hat Aluminium den Nachteil, die Reduktion der Eisenoxid-Partikel zu behindern (EP-A 615 231) und somit die magnetischen Eigenschaften zu verschlechtern. Es muß deswegen bei höheren Temperaturen reduziert werden, wodurch die Partikel versintern. Dadurch werden die Vorteile der gemischten Si/Al-Beschichtung wieder zunichte gemacht.

Die Reduktion von Eisenoxid zu ferromagnetischen Metallpartikeln kann besonders vorteilhaft in einem Festbettreaktor durchgeführt werden, wie in EP-A-56 257 vorgeschlagen. Ein feines Pulver kann jedoch nicht in einem Festbettreaktor reduziert werden, weil die in einem solchen Reaktor vorliegende Schüttung nicht gleichmäßig von einem Reduktionsmittel wie Wasserstoff durchströmt werden kann. Voraussetzung für die Reduktion in einem Festbettreaktor ist daher, daß aus den α-FeOOH-Nadeln Stränge oder Granulate von 2 bis 10 mm Durchmesser geformt werden können. In EP-A 56 257 wird daher vorgeschlagen, Platten aus feuchtem α-FeOOH-Filterkuchen in Stücke von 10*10*5 mm³ zu schneiden und dann zu trocknen. Dieses Verfahren ist jedoch zu teuer und technisch sehr aufwendig.

Das Ausformen des feuchten Filterkuchens kann vorteilhaft mit einer Strangpresse, einem Pastengranulator oder einem Extruder erfolgen.

Feuchte Filterkuchen aus mit Siliziumdioxid beschichteten, feinteiligen Partikeln zeigen jedoch das Phänomen der Thixotropie. Somit bereitet das Verstrangen derartiger Filterkuchen mit den genannten Apparaturen erhebliche Probleme.

Die US 5,466,306 betrifft nadelförmige ferromagnetische Legierungsteilchen auf Eisen-Basis, die ferner mindestens ein Metall aus der Gruppe bestehend aus Nickel, Aluminium, Silizium, Phosphor, Kobalt, Magnesium, Bor und Zink enthalten.

Der Erfindung lag daher die Aufgabe zugrunde, ferromagnetische Pigmente mit einer Länge von nicht mehr als 195 nm mit guter Dispergierfähigkeit, hoher Koerzitivkraft, hoher Magnetisierung und hoher Korrosionsstabilität auf technisch einfache und wirtschaftliche Weise zur Verfügung zu stellen.

Demgemäß wurden ferromagnetische, eisen- und cobalthaltige Pigmente enthaltend pro 100 mol der molaren Summe aus Eisen und Cobalt 1 bis 5 mol Aluminium, 3 bis 10 mol Silizium, 0,7 bis 3,5 mol Phosphor 0,01 bis 1 mol Magnesium und Sauerstoff, wobei die Summe der Gewichtsanteile der Elemente Eisen, Cobalt, Aluminium, Silizium, Phosphor, Magnesium und Sauerstoff 95,1 bis 100 Gew.-% bezogen auf das Gesamtgewicht der Pigmente beträgt, ein Verfahren zur Herstellung solcher Pigmente, die Verwendung der Pigmente zur Herstellung von magnetischen Aufzeichnungsmaterialien sowie magnetische Aufzeichnungsmaterialien, die solche Pigmente enthalten, gefunden.

Zur Herstellung der α-FeOOH-Keime setzt man erfindungsgemäß zunächst eine Eisen-(II)-Ionen enthaltende insbesondere wäßrige Lösung in Anwesenheit von Phosphat-Ionen mit einer bezüglich der vollständigen Ausfällung von Eisen-(II)-hydroxid unterstöchiometrischen Menge einer basischen Alkalimetallverbindung zu Eisen-(II)-hydroxid um.

Als Eisen-(II)-verbindung können Eisen-(II)-Salze einer vorzugsweise anorganischen Säure, wie Perchlorsäure oder Schwefelsäure verwendet werden.

Die Phosphat-Ionen können vorzugsweise in Form von anorganischen Verbindungen wie Phosphorsäure und deren Salze wie NaH₂PO₄, Na₂HPO₄, KH₂PO₄ sowie in Form der entsprechenden oligomeren Phosphate und Phosphorsäuren eingesetzt werden.

Als basische Alkalimetallverbindungen kommen organische und vorzugsweise anorganische Salze wie Carbonate, Oxide und insbesondere Hydroxide der Alkalimetalle in Betracht.

Die Eisen-(II)-Salzlösung sollte vorteilhaft eine Konzentration an Eisen-(II)-Ionen von 0,5 bis 1,4, vorzugsweise 0,8 bis 1,3 mol/l aufweisen.

Die Phosphat-Ionen sollte man zweckmäßigerweise in insbesondere wäßriger Lösung zu der Eisen-(II)-Salzlösung zugeben, so daß in den ferromagnetischen Pigmenten die Menge an Phosphor mindestens 0,7 mol, höchstens 3,5 mol pro 100 mol der Summe aus Eisen und Cobalt beträgt. Die hierzu erforderlichen Parameter lassen sich leicht durch einige einfache Vorversuche ermitteln. Ist die Menge an Phosphor geringer, so wird nur grobteiliges, uneinheitliches α-FeOOH mit Dendriten erhalten, aus dem sich nur grobteilige, versintarte Metallpartikel mit Längen über 200 nm herstellen lassen, wobei die Koerzitivkraft Hc nicht größer als 115 kA/m wird. Solche Pigmente sind für die hochdichte Aufzeichnung ungeeignet. Ist die Menge an Phosphor größer, so werden die α-FeOOH-Teilchen zu klein. Die Koerzitivkraft daraus hergestellter Magnetpigmente ist zu gering für die hochdichte Aufzeichnung.

Zu dieser Lösung kann man unter Rühren die basische Alkalimetallverbindung vorteilhaft als insbesondere wäßrige Lösung geben, wobei die Lösung eine Alkalimetall-Ionen-Konzentration von 2 bis 6, insbesondere 3 bis 5 mol/l aufweisen sollte, in einer Menge, die zur Ausfällung von 30 bis 80, insbesondere 50 bis 60 % der Eisen-(II)-Ionen in Form von Eisen-(II)-hydroxid ausreicht.

Die Fällungsreaktion sollte man vorzugsweise bei 20 bis 65, insbesondere 40 bis 60°C durchführen.

Anschließend erfolgt erfindungsgemäß eine Oxidation bei 20 bis 65°C, insbesondere 40 bis 60°C bis der pH-Wert unter 4 absinkt und danach eine weitere Oxidation bei 50 bis 80, insbesondere 60 bis 80°C, wobei man die Unterschreitung eines pH-Wertes von 4 durch Zugabe basischer Verbindungen verhindert.

Als geeignete Oxidationsmittel kommen feste, flüssige und vorzugsweise gasförmige Oxidationsmittel, insbesondere molekularen Sauerstoff enthaltende Gase wie Luft, in Betracht.

Die erhaltenen α-Eisenoxidhydrat-Teilchen werden anschließend mit einer Cobalt-(II)-Verbindung imprägniert, wobei man eine Cobalt-(II)-Verbindung in Substanz oder vorteilhaft in Form einer insbesondere wäßrigen Lösung zugibt.

Als Cobalt-(II)-verbindung können Cobalt-(II)-Salze einer organischen Säure wie Ameisensäure oder Essigsäure, vorzugsweise einer anorganischen säure, wie Salzsäure, Perchlorsäure oder Schwefelsäure verwendet werden.

Durch Zugabe basischer Verbindungen, vorzugsweise der genannten basischen Alkalimetallverbindungen stellt man erfindungsgemäß einen pH-Wert von 7 bis 10 ein, so daß auf die α-Eisenoxidhydroxid-Teilchen Cobalthydroxid auffällt.

Die Menge an Cobalt-(II)-Ionen sollte vorteilhaft so eingestellt werden, daß in den ferromagnetischen Pigmenten die Menge an Cobalt mindestens 5 mol und höchstens 20 mol pro 100 mol der Summe aus Eisen und Cobalt beträgt. Beträgt die Cobalt-Menge weniger als 5 mol, so werden keine stabilen Metallpigmente erhalten. Ist die Menge größer, so zieht Cobalthydroxid nicht mehr auf dem Pigment auf, sondern es bilden sich separate Cobalthydroxid-Phasen.

Anschließend gibt man erfindungsgemäß eine Alkalimetallsilikat-Lösung, insbesondere Natriumsilikat-Lösung, vorzugsweise unter Rühren bei 20 bis 80, vorzugsweise 35 bis 50°C zu. Die Menge an Alkalisilikat-Lösung sollte so eingestellt werden, daß die Menge an Silizium in den ferromagnetischen Pigmenten 3 bis 10 mol pro 100 mol der Summe aus Eisen und Cobalt beträgt.

Die α-Eisenoxidhydroxid-Teilchen werden dann mit einer Aluminium-Verbindung behandelt, wobei man eine Aluminium-Verbindung vorteilhaft in Form einer insbesondere wäßrigen Lösung zugeben sollte.

Als Aluminiumverbindung können Aluminium-Salze einer organischen Säure wie Ameisensäure oder Essigsäure, vorzugsweise einer anorganischen Säure, wie Salzsäure, Perchlorsäure oder Schwefelsäure verwendet werden.

Durch Zugabe basischer Verbindungen, vorzugsweise der genannten basischen Alkalimetallverbindungen stellt man erfindungsgemäß einen pH-Wert von 6 bis 10 ein, so daß auf die α-Eisenoxidhydroxid-Teilchen Aluminiumhydroxid auffällt.

Die Fällungsreaktion sollte man vorteilhaft bei 20 bis 80, insbesondere 35 bis 50°C durchführen.

Die Menge an Aluminium-(III)-Ionen sollte so eingestellt werden, daß die Menge an Aluminium in den ferromagnetischen Pigmenten 1 bis 5 mol pro 100 mol der Summe aus Eisen und Cobalt beträgt.

Die Gesamtmenge an Aluminium und Silizium wird dabei erfindungsgemäß so bemessen werden, daß die molare Summe der Mengen von Aluminium und Silizium 4 bis 13 mol pro 100 mol der molaren Summe aus Eisen und Cabalt beträgt. Ist die Menge geringer als 4 mol, so wird kein ausreichender Sinterschutz erzielt und die Partikel sintern bei Entwässerung und Reduktion zusammen. Ist die Menge größer als 13 mol, so ist die Magnetisierung der entstehenden ferromagnetischen Partikel zu gering. Das Verhältnis von Silizium zu Aluminium sollte mindestens 1 betragen. Ist das Verhältnis kleiner als 1, so wird die Reduktion behindert und es werden keine Partikel mit einer Koerzitivkraft von größer 115 kA/m erhalten, die für die hochdichte magnetische Aufzeichnung erforderlich sind.

Anschließend werden die mit Cobalthydroxid, Siliziumdioxid und Aluminiumhydroxid beschichteten α-FeOOH-Teilchen mit einem HilfsStoff zur Verhinderung von Thixotropie behandelt.

Deshalb enthält das erfindungsgemäße Pigment Magnesium das in Form von Salzen einer organischen Säure wie Essigsäure, vorzugsweise einer anorganischen Säure, wie Salzsäure, Perchlorsäure oder Schwefelsäure eingesetzt wird und zwar in einer Menge von 0,01 bis 1 mol Magnesium pro 100 mol der molaren Summe aus Eisen und Cobalt.

Das Magnesium sollte vorteilhaft in Form einer insbesondere wäßrigen Salzlösung zugegeben werden, wobei das molare Verhältnis der zugegebenen Magnesium-Ionen zu den Eisen-(II)-Ionen vorzugsweise mindestens 5:100 betragen sollte. Wird weniger Magnesium eingesetzt, so verhindert dies die Thixotropie des α-FeOOH-Filterkuchens nicht. Zur Behandlung mit Magnesium sollte ein pH-Wert von 6-8, vorzugsweise 6,5 bis 7,5 eingestellt werden. Ist der pH-Wert kleiner als 6, so beginnt sich das aufgefällte Cobalthydroxid wieder abzulösen, ist der pH-Wert größer als 8, so fällt das zugegebene Magnesium teilweise als Magnesiumhydroxid auf das α-FeOOH auf. Enthält das ferromagnetische Pigment mehr als 1 mol Magnesium pro 100 mol der molaren Summe aus Eisen und Cobalt, so werden die guten magnetischen Eigenschaften zerstört.

Nach der Behandlung mit Magnesium wird die Suspension mit den beschichteten α-FeOOH-Teilchen erfindungsgemäß filtriert und gewaschen, wobei die Gegenionen der auf die Teilchen aufgefällten Elemente, insbesondere aber auch die als Hilfsmittel zugegebenen Magnesiumionen vorzugsweise soweit herausgewashen werden sollten, so daß nicht mehr als 1 mol Magnesium pro 100 mol der molaren der Summe aus Eisen und Cobalt im Pigment verbleiben.

Der verbleibende α-FeOOH-Filterkuchen kann anschließend problemlos zu Strängen in dafür üblicherweise verwendeten Apparaturen, wie Pastengranulatoren, Strangpressen oder Extrudern, verarbeitet werden.

Nach dem Trocknen sollten die Stränge vorzugsweise eine mittlere Dicke von 2 bis 10 mm aufweisen.

Die erfindungsgemäßen Pigmente können neben den Elementen Eisen, Cobalt, Aluminium, Silizium, Phosphor, Sauerstoff und Magnesium aus denen die erfindungsgemäßen Pigmente vorzugsweise zu 95,1 bis 100 Gew.-%, insbesondere 98 bis 100 Gew.-% bestehen, vorteilhaft weitere Elemente oder Verbindungen von Ele-menten wie Alkalimetalle, insbesondere Natrium, Übergangsmetalle, insbesondere Mangan, Yttrium oder Lanthan oder Lanthanide, insbesondere Neodym, sowie Mischungen von solchen Elementen oder Verbindungen solcher Elemente enthalten.

Sowit betrifft die vorliegende Erfindung auch Pigmente der hier in Rede stehenden Art enthaltend 0,02 bis 1 mol Natrium pro 100 Mol der molaren Summe aus Eisen und Cobalt, wobei die Summe der Gewichtsanteile der Elemente Eisen, Cobalt, Magnesium, Aluminium, Silizium, Phosphor, Natrium und Sauerstoff 95, 1 bis 100 Gewichtsprozent bezogen auf das Gesamtgewicht der Pigmente beträgt.

Die Zugabe solcher Elemente oder von Verbindungen solcher Elemente kann bei jeder der beschriebenen Reaktionen erfolgen.

Vorteilhaft kann man Alkalimetalle, insbesondere Natrium, bei der Fällung von Eisen-(II)-hydroxid in Form basischer Alkalimetallverbindungen wie organischer und vorzugsweise anorganischer Salze wie Carbonate, Oxide und insbesondere Hydroxide der Alkalimetalle, beispielsweise Natriumhydroxid, oder bei der Zugabe von Silizium in Form von Alkalisilikaten, insbesondere Natriumsilikaten wie Natriummetasilikat (Wasserglas), einsetzen.

Durch Natrium wird ein Teil der sauren Oberflächen-Si-OH-Gruppen in Si-O-Na-Gruppen umgewandelt, die alkalisch reagieren. Auf diese Art und Weise kann trotz geringen Aluminium-Gehalts in der äußeren Schutzschicht ein leicht basischer pH-Wert des Pigments eingestellt werden, der für die Dispergierung mit Dispergierhilfsmitteln, die insbesondere saure Gruppen, wie Carboxylat-, Sulfonat oder Phosphonat-Gruppen tragen, vorteilhaft ist.

Der Natrium-Gehalt sollte dabei vorzugsweise nicht mehr als 1 mol und nicht weniger als 0,02 mol pro 100 mol der molaren Summe aus Eisen und Cobalt betragen.

Als Übergangsmetall-, insbesondere Mangan- oder Yttrium-, Lanthan- oder Lanthanid insbesondere Neodym-Verbindung können die betreffenden Metall-Salze einer organischen Säure wie Essigsäure, Ameisensäure, vorzugsweise einer anorganischen Säure, wie Salzsäure, Perchlorsäure oder Schwefelsäure verwendet werden.

Erfindungsgemäß werden die Teilchen dann zur Umwandlung des α-FeOOH zu α-Fe₂O₃ bei 700 bis 850°C, insbesondere 750 bis 820°C getempert, so daß sich Reaktionszeiten von 45 bis 90 Minuten ergeben, und anschließend mit einem reduzierenden Gas, vorzugsweise wasserstoff bei 380 bis 520°C, insbesondere 400 bis 480°C, umgesetzt, wodurch sich Reaktionszeiten von 5 bis 20 Stunden ergeben. Die beiden Reaktionen kännen in für solche Umsetzungen an sich bekannten Apparaturen wie Drehrohröfen, vorzugsweise Festbettreaktoren durchgeführt werden.

Abschließend passiviert man die Teilchen erfindungsgemäß durch Umsetzung mit einem festen, flüssigen oder vorzugsweise gasförmigen Oxidationsmittel, insbesondere einem molekularen Sauerstoff enthaltenden Gas, wie Luft oder vorzugsweise einem Gemisch aus Luft und Stickstoff.

Entsprechend dem Herstellverfahren bestehen die erfindungsgemäßen Pigmente zu 30 bis 70 Vol-% aus einem Kern, der im wesentlichen aus Eisen und Cobalt besteht, und zu 30 bis 70 Vol-% aus einer Hülle, die im wesentlichen aus Aluminium, Phosphor, Silizium und Sauerstoff sowie Magnesium und gegebenenfalls Natrium beSteht.

Die nadelförmigen Pigmente sollten vorteilhaft eine durchschnittliche Länge von 50 bis 195 nm, insbesondere 60 bis 160 nm, wobei sich für magnetische Aufzeichnungsträger, die für analoge Videoaufzeichnungen besonders geeignet sind, Nadellängen von vorzugsweise 130 bis 180 nm und für solche, die für digitale Videoaufzeichnungen besonders geeignet sind, Nadellängen von vorzugsweise 50 bis 100 nm empfehlen, ein Verhältnis der durchschnittlichen Länge zur durchschnittlichen mittleren Nadeldicke von 3:1 bis 9:1, insbesondere 4:1 bis 8:1 und eine spezifische Oberfläche (SSA) bestimmt nach DIN 66132 von 40 bis 65, insbesondere 45 bis 55 m²/g aufweisen. Die Bedingungen zur Einstellung der für den jeweiligen Anwendungszweck optimalen Nadelgeometrie lassen sich durch einige einfache Vorversuche leicht ermitteln.

Die erfindungsgemäßen Pigmente zeichnen sich durch gute ferromagnetische Eigenschaften aus. Die Koerzitivkraft Hc beträgt bei einer mittleren Stopfdichte von 0,95 g/cm³ mindestens 115 kA/m und die Magnetisierung Mm mindestens 135 nTm³/g bei einem Magnetfeld von 400 kA/m und mindestens 140 nTm³/g bei einem Magnetfeld von 800 kA/m jeweils gemessen mit einem Schwingmagnetometer.

Ferner lassen sich die Pigmente gut dispergieren. Der pH-Wert der Pigmente beträgt 7 bis 10, insbesondere 7,5 bis 9 und die Leitfähigkeit 30 bis 350 µS/cm, insbesondere 80 bis 160 µS/cm.

Nach einwöchiger Lagerung der erfindungsgemäßen Pigmente in einem Klimaschrank bei 65°C und 95 % rel. Feuchte beträgt deren Magnetisierung mindestens 115 nTm³/g bei einem Magnetfeld von 400 kA/m.

Die erfindungsgemäßen ferromagnetischen Pigmente können zur Herstellung magnetischer Aufzeichnungsmaterialien verwendet werden. Dazu können die Pigmente gegebenenfalls mit Füllstoffen in an sich bekannter Weise in einer Lösung aus einem Läsungsmittel, einem Bindemittel und weiteren Zusatzstoffen wie einem Gleitmittel und einem Dispergiermittel dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls erforderlich, Aushärten des Bindemittels mit anschließendem Kalandrieren.

Als Lösungsmittel können wie üblich Ether wie Tetrahydrofuran oder Dioxan, Ketone wie Methylethylketon oder Cyclohexanon, Ester wie Ethylacetat oder Kohlenwasserstoffe wie Alkane oder Aromaten oder Mischungen dieser Lösungsmittel eingesetzt werden.

Als Bindemittel kommen bekanntermaßen Polyurethane, Polyacrylate, Polymethylacrylate, Polyamid, Vinylpolymere wie Polystyrol, Polyvinylchlorid, Polyvinylacetat, Polyvinylpropionat oder Polyacrylnitril, cellulosehaltige Bindemittel wie Celluloseester, insbesondere Cellulosenitrate, Celluloseacetat, Cellulosetriacetat, Celluloseacetopropionat oder Celluloseacetobutyrat, Phenoxyharze, Epoxyharze oder Block- oder Copolymerisate dieser Verbindungen in Betracht.

Als Gleitmittel finden üblicherweise Carbonsäuren mit 10 bis 20 Kohlenstoffatomen, insbesondere Stearinsäure und Palmitinsäure, oder Derivate von Carbonsäuren, wie deren Salze, Ester und Amide Anwendung.

Als Dispergiermittel können in üblicher Weise kationische, nichtionische oder vorzugsweise anionische Tenside verwendet werden, wie Carboxylate, Sulfonate oder Phosphonate von Kohlenwasserstoffen, insbesondere Alkyl- oder Arylverbindungen.

Als Füllstoffe kommen wie üblich anorganische und organische Pigmente in Betracht, z.B. Aluminiumoxid, Siliziumdioxid, Ruß, Polyethylen und Polypropylen.

Als nichtmagnetische und nichtmagnetisierbare Träger lassen sich die üblichen starren und flexiblen Trägermaterialien verwenden, insbesondere Folien aus linearen Polyestern, wie Polyethylenterephthalat, im allgemeinen in Stärken von 4 bis 200 µm und insbesondere von 6 bis 36 µm.

Bei der Herstellung magnetischer Aufzeichnungsmaterialien können die erfindungsgemäßen Pigmente allein oder im Gemisch mit anderen ferromagnetischen Materialien verwendet werden. Ebenso ist es möglich, mehrere Lagen, von denen mindestens eine das erfindungsgemäße Pigment enthält, auf das Trägermaterial aufzubringen.

Durch die Verwendung der erfindungsgemäßen Pigmente zur Herstellung magnetischer Aufzeichnungsmaterialien erhält man magnetische Aufzeichnungsmaterialien mit guter Abriebfestigkeit, geringer Klebeneigung, gleichmäßigem Laufverhalten, hohem Signal/Rausch-Verhältnis, glatter Schichtoberfläche und hohem Pegel.

### Beispiele

Im folgenden werden Beispiele für die Zusammensetzung nadelförmiger ferromagnetischer Pigmente angegeben. Die Beispiele 15 bis 34 sollen die Erfindung erläutern, ohne daß diese auf die Beispiele beschränkt ist.

Zur Charakterisierung der Metallteilchen wurden die spezifische Oberfläche SSA in [m²/g], gemessen nach BET gemäß DIN 66 132 mit Hilfe eines Ströhlein-Areameters der Firma Ströhlein, Düsseldorf, Deutschland, nach dem Einpunkt-Differenz-Verfahren nach Haul und Dümbgen, sowie die magnetischen Werte bestimmt. Diese wurden mit einem Impulsmagnetometer bei einem magnetischen Feld von 400 kA/m gemessen und zwar die Koerzitivfeldstärke Hc in [kA/m] bei einer Stopfdichte von 0,95 g/cm³ sowie die spezifische remanente Magnetisierung Mr/ 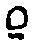 und die spezifische Magnetisierung Mm/ 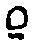 in [nTm³/g].

Außerdem wurde noch die Schaltfeldverteilung SFD nach Williams und Comstock (AIP Conf. Proc. 5 (1971) 738) gemessen.

Zur Prüfung der Stabilität der Materialien wurden diese eine Woche bei 65°C und 95 % relativer Feuchte gelagert, und danach wieder die Magnetisierung gemessen.

pH-Wert und Leitfähigkeit der Pigmente wurden nach den Europäischen Normen EN-ISO 787-9 und EN-ISO 787-14 bestimmt.

Die durchschnittlichen Abmessungen der Partikel wurden elektronenmikroskopischen Aufnahmen (100000:1) entnommen.

### Herstellung eines oxidischen Precursors

### Beispiel 1

In 61 einer wäßrigen Eisen-(II)-sulfat-Lösung mit einer Konzentration von 0,9 mol/l wurden 15,8 g Na₄P₂O₇*10 H₂O gelöst. Anschließend wurde bei 45°C unter heftigem Rühren und Durchleiten von Stickstoff 1,5 l einer wäßrigen NaOH-Lösung mit einer Konzentration von 4,32 mol/l ("4,32 molare NaOH") zugegeben, so daß sich ein pH-Wert von 7,3 einstellte.

Dann wurde bei 45°C ein Luft/Stickstoff-Gasgemisch (60 Vol-%:40 Vol-%) mit einem Volumenstrom von 1000 l/h eingeleitet, bis ein pH-Wert der Suspension von 4 unterschritten wurde.

Dann wurde bei 70°C bis zum vollständigen Umsatz der Eisen-(II)-Ionen Luft mit einem Volumenstrom von 1000 l/h eingeleitet und gleichzeitig der pH-Wert der Suspension mit 4,32 molarer NaOH auf einen pH-Wert von 5,4 eingestellt.

Anschließend wurde mit 4,32 molarer NaOH ein pH-Wert von 8 eingestellt, unter Konstanthaltung dieses pH-Wertes mit 4,32 molarer NaOH eine Lösung von 114,4 g CoSO₄*7 H₂O in 0,5 l Wasser innerhalb von 20 min zugetropft und 60 min nachgerührt.

Danach wurde eine Lösung von 19,2 g Na₂SiO₃ in 172,8 g Wasser zugegeben, wodurch der pH-Wert der Suspension auf 9 stieg.

Dann wurde eine Lösung von 21,6 g Al₂(SO₄)₃*18 H₂O in 100 ml Wasser zugegeben, wobei ein Unterschreiten eines pH-Wertes von 7 durch Zugabe von 4,32 molarer NaOH verhindert wurde.

Anschließend wurde eine Lösung von 73 g MgSO₄*7 H₂O in 100 ml Wasser zugegeben und 30 min nachgerührt.

Danach wurde der Feststoff abfiltriert und mit Wasser sulfatfrei gewaschen. Der feuchte Filterkuchen wurde zu Strängen mit einem Durchmesser von 4 mm geformt und bei 110°C getrocknet.

Die erhaltenen Partikel mit den aus Tabelle 1 ersichtlichen Eigenschaften waren nadelförmig, mit einheitlicher Partikelgrößenverteilung und dendritenfrei.

200 g der Partikel wurden in Stickstoff auf 800°C erhitzt. Die erhaltenen oxidischen Partikel wiesen eine spezifische Oberfläche von 42 m²/g auf (Tabelle 1).

### Beispiel 2

Es wurde wie in Beispiel 1 verfahren, jedoch wurde die Oberflächenbehandlung bei 35°C durchgeführt mit den in Tabelle 1 angegebenen Cobaltmengen.

### Beispiele 3-14

Es wurde wie in Beispiel 1 verfahren, jedoch mit den in Tabelle 1 aufgeführten Verbindungen, Mengen und Verfahrensbedingungen.

### Vergleichsbeispiele

Es wurde wie in Beispiel 1 verfahren, jedoch mit den in Tabelle 2 aufgeführten Verbindungen, Mengen und Verfahrensbedingungen

### Vergleichsbeispiel 1

Die Partikelverteilung war sehr uneinheitlich und das Produkt wies viele Dendriten auf.

### Vergleichsbeispiel 2

Das FeOOH enthielt kein Cobalt.

### Vergleichsbeispiel 3

Das FeOOH enthält weniger Cobalt als 5 mol pro 100 mol der Summe aus Eisen und Cobalt.

### Vergleichsbeispiel 4

Die Menge an Silizium und Aluminium war kleiner als 4 mol pro 100 mol der Summe aus Eisen und Cobalt. Beim Tempern sinterten die Partikel stark zusammen. Die spezifische Oberfläche der Partikel betrug lediglich 29 m²/g.

### Vergleichsbeispiel 5

Die Summe der Mengen an Silizium und Aluminium war größer als 13 mol pro 100 mol der Summe aus Eisen und Cobalt.

### Vergleichsbeispiel 6

Das molare Verhältnis von Silizium zu Aluminium betrug nur 0,7.

### Vergleichsbeispiel 7

Es erfolgte keine Behandlung mit Magnesium. Der Filterkuchen zeigte thixotropes Verhalten. Eine Ausformung zu Strängen war nicht möglich.

### Vergleichsbeispiel 8

Cobalt löste sich wieder ab. Das Filtrat war stark rosa gefärbt.

### Vergleichsbeispiel 9

Das Endprodukt enthielt zuviel Magnesium.

### Vergleichsbeispiel 10

Das Endprodukt enthielt zuviel P.

### Vergleichsbeispiel 11

Es wurde ein sehr feinteiliges Fe₂O₃ erhalten. Die spezifische Oberfläche der Partikel betrug 57 m²/g.

### Vergleichsbeispiel 12

Beim Tempern sinterten die Partikel stark zusammen. Die spezifische Oberfläche der Partikel betrug lediglich 27 m²/g. Herstellung von Metallpigmenten.

### Beispiel 15

7g der gemäß dem Herstellungsverfahren von Beispiel 1 erhaltenen Partikel wurden 16 h bei 420°C in einem Wasserstoff-Strom von 50 l/h reduziert. Der Wasser-Gehalt im Abgas betrug am Ende der Reaktion weniger als 0,02 g/m³.

Nach dem Abkühlen wurde bei 70°C ein Luft/Stickstoff-Gasgemisch (25 Vol-%: 75 vol-%) mit einem Volumenstrom von 40 l/h über die Partikel geleitet.

Die erhaltenen erfindungsgemäßen Pigmente wiesen eine durchschnittliche Nadellänge von 170 nm und ein Verhältnis der mittleren Länge zur mittleren durchschnittlichen Dicke von 8:1 auf. Die Eigenschaften sowie die Zusammensetzung der Pigmente sind in Tabelle 3 zusammengefaßt.

### Beispiele 16-29

Es wurde wie in Beispiel 15 verfahren, jedoch mit den in Tabelle 3 aufgeführten Verbindungen und Verfahrensbedingungen.

### Beispiel 30

125 g der gemäß dem Herstellungsverfahren von Beispiel 1 erhaltenen Partikel wurden 16 Stunden bei 440°C in einem Festbettreaktor mit einem Wasserstoff-Strom von 500 l/h reduziert. Nach dem Abkühlen wurden die Partikel (bei 80°C mit einem Luft/Stickstoff-Gasgemisch (40 Vol-%: 60 Vol-%) behandelt.

Die Eigenschaften sowie die Zusammensetzung der Pigmente sind in Tabelle 4 zusammengefaßt.

### Beispiele 31-34

Es wurde wie in Beispiel 30 verfahren, jedoch mit den in Tabelle 4 aufgeführten Verbindungen und Verfahrensbedingungen.

### Vergleichsbeispiele

Es wurde wie in Beispiel 15 verfahren, jedoch mit den in Tabelle 5 aufgeführten Verbindungen und Verfahrensbedingungen.

### Vergleichsbeispiel 13

Die Koerzitivkraft der Pigmente betrug nur 76,5 kA/m.

### Vergleichsbeispiel 14

Die Magnetisierung der Pigmente betrug nur 127 nTm³/g in einem Magnetfeld von 400 kA/m, nach Klimatest nur noch 103 nTm³/g.

### Vergleichsbeispiel 15

Die Magnetisierung der Pigmente betrug nur 120 nTm³/g in einem Magnetfeld von 400 kA/m, nach Klimatest nur noch 104 nTm³/g.

### Vergleichsbeispiel 16

Es wurde ein stark versintertes Produkt erhalten. Die Koerzitivkraft der Pigmente betrug nur 105,1 kA/m.

### Vergleichsbeispiel 17

Die Magnetisierung der Pigmente betrug nur 132 nTm³/g in einem Magnetfeld von 400 kA/m, nach Klimatest nur noch 113 nTm³/g.

### Vergleichsbeispiel 18

Die Koerzitivkraft der Pigmente betrug nur 109,3 kA/m.

### Vergleichsbeispiel 19

Die Koerzitivkraft der Pigmente betrug nur 111,5 kA/m. Die Magnetisierung der Pigmente betrug nur 132 nTm³/g in einem Magnetfeld von 400 kA/m, nach Klimatest nur noch 110 nTm³/g.

### Vergleichsbeispiel 20

Es wurde ein stark versintertes Produkt erhalten. Die Koerzitivkraft der Pigmente betrug nur 111,5 kA/m.

### Vergleichsbeispiel 21

Die Magnetisierung der Pigmente betrug nur 130 nTm³/g in einem Magnetfeld von 400 kA/m, nach Klimatest nur noch 107 nTm³/g.

### Vergleichsbeispiel 22

Die Koerzitivkraft der Pigmente betrug nur 107,4 kA/m.

### Vergleichsbeispiel 23

Die Koerzitivkraft der Pigmente betrug nur 105,5 kA/m. Die Magnetisierung der Pigmente betrug nur 130 nTm³/g in einem Magnetfeld von 400 kA/m, nach Klimatest nur noch 103 nTm³/g.

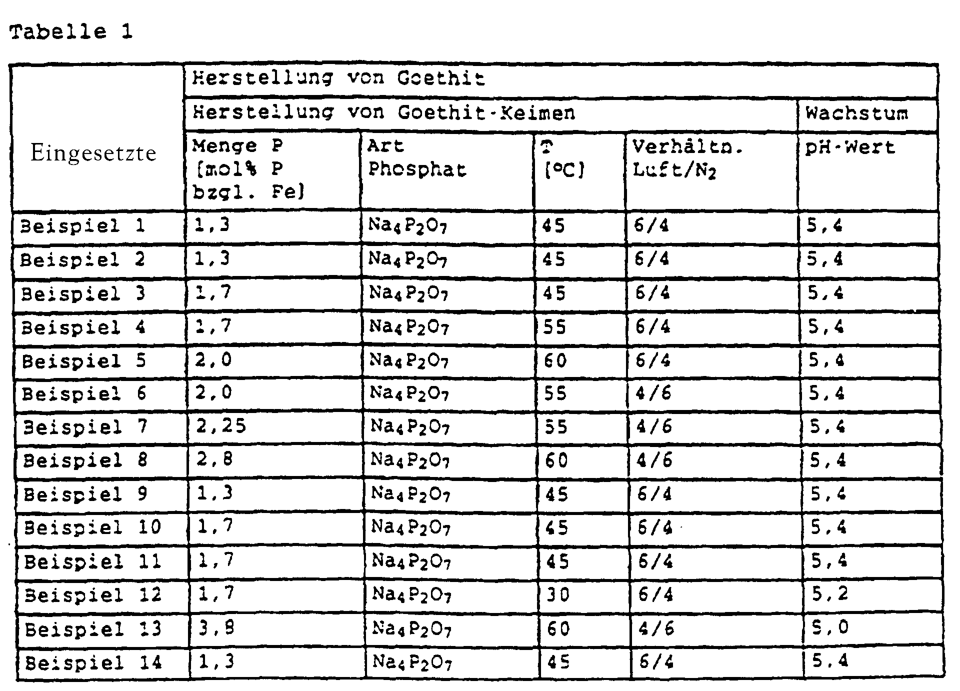

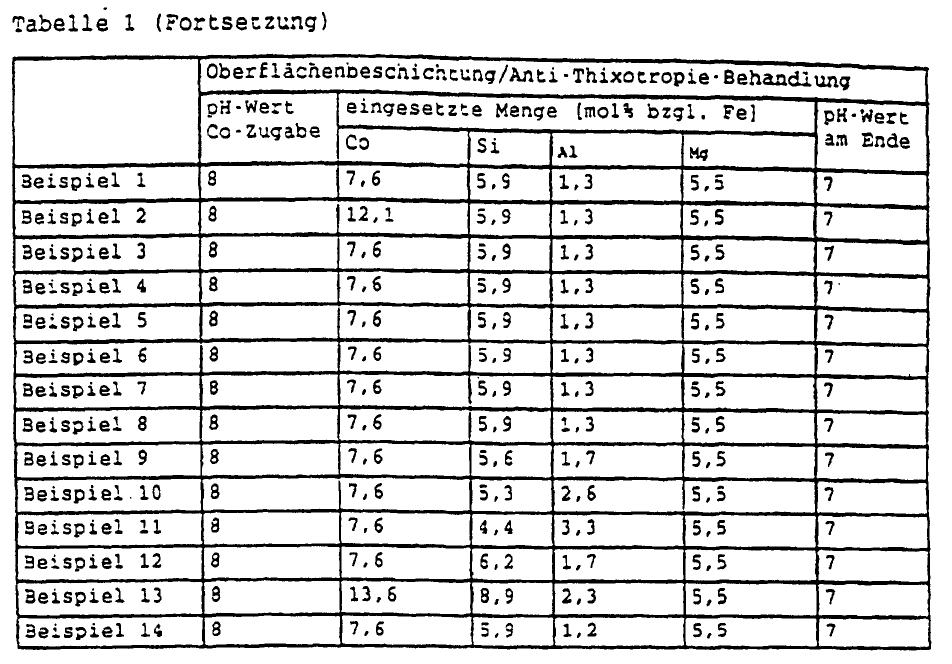

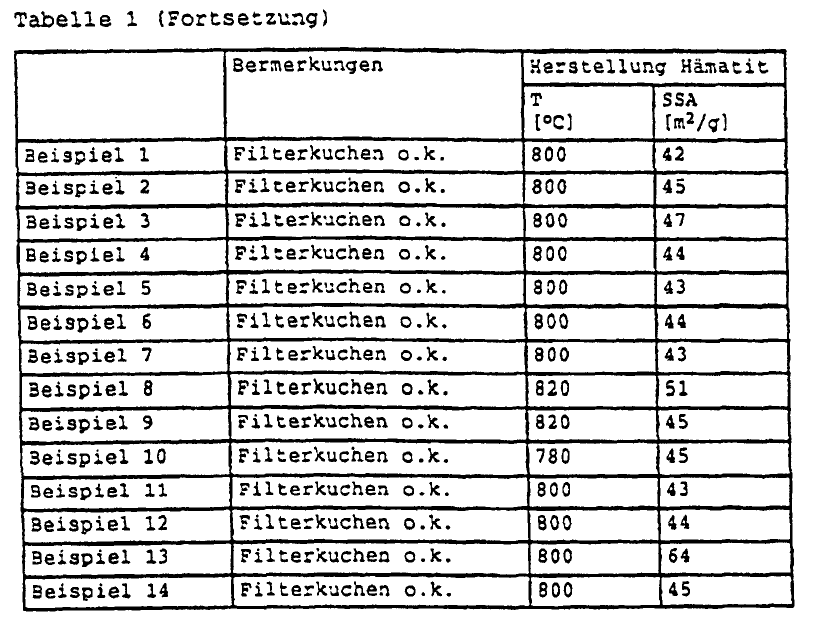

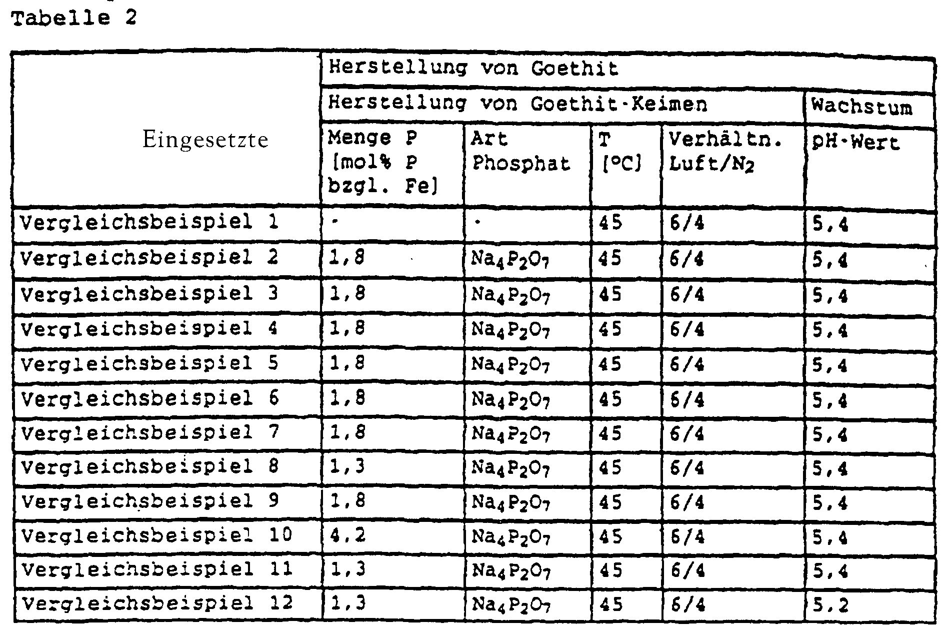

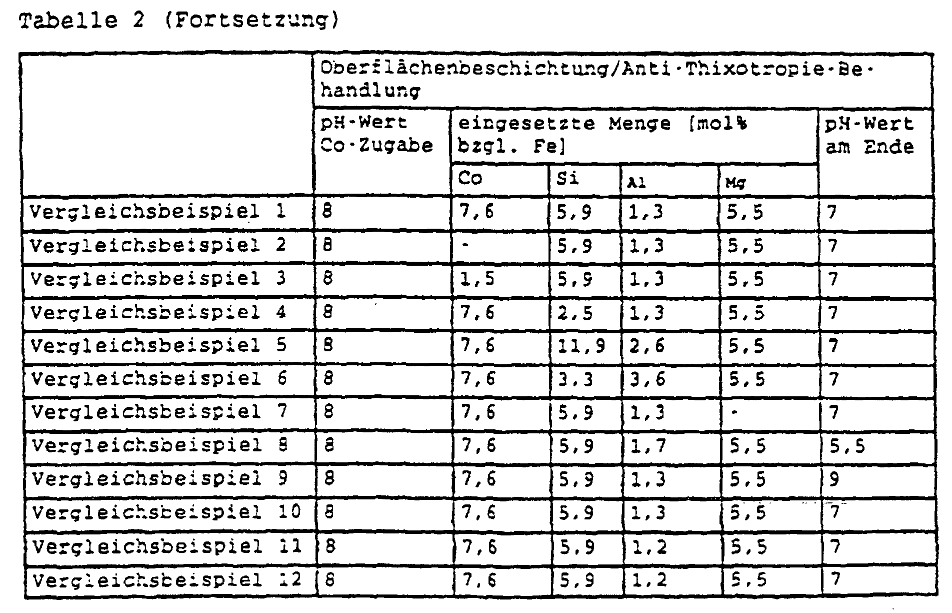

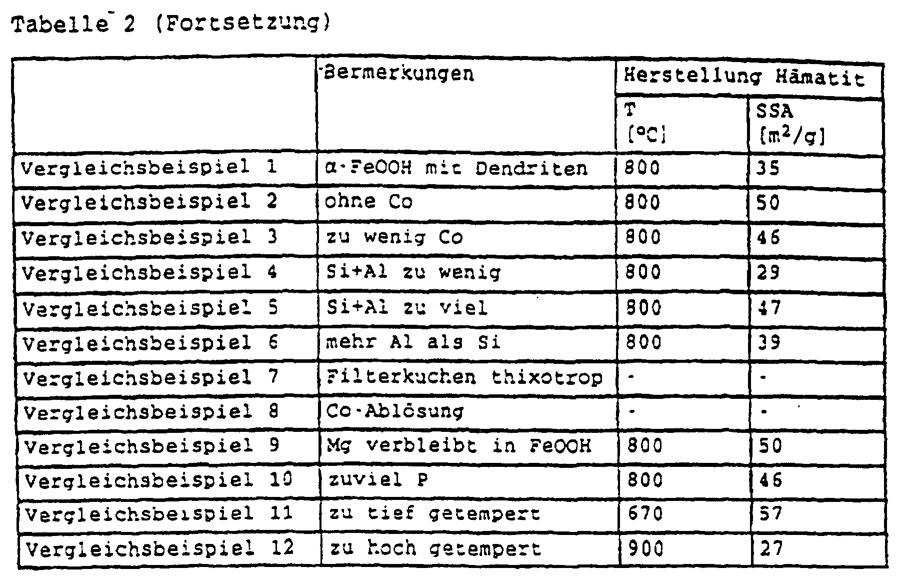

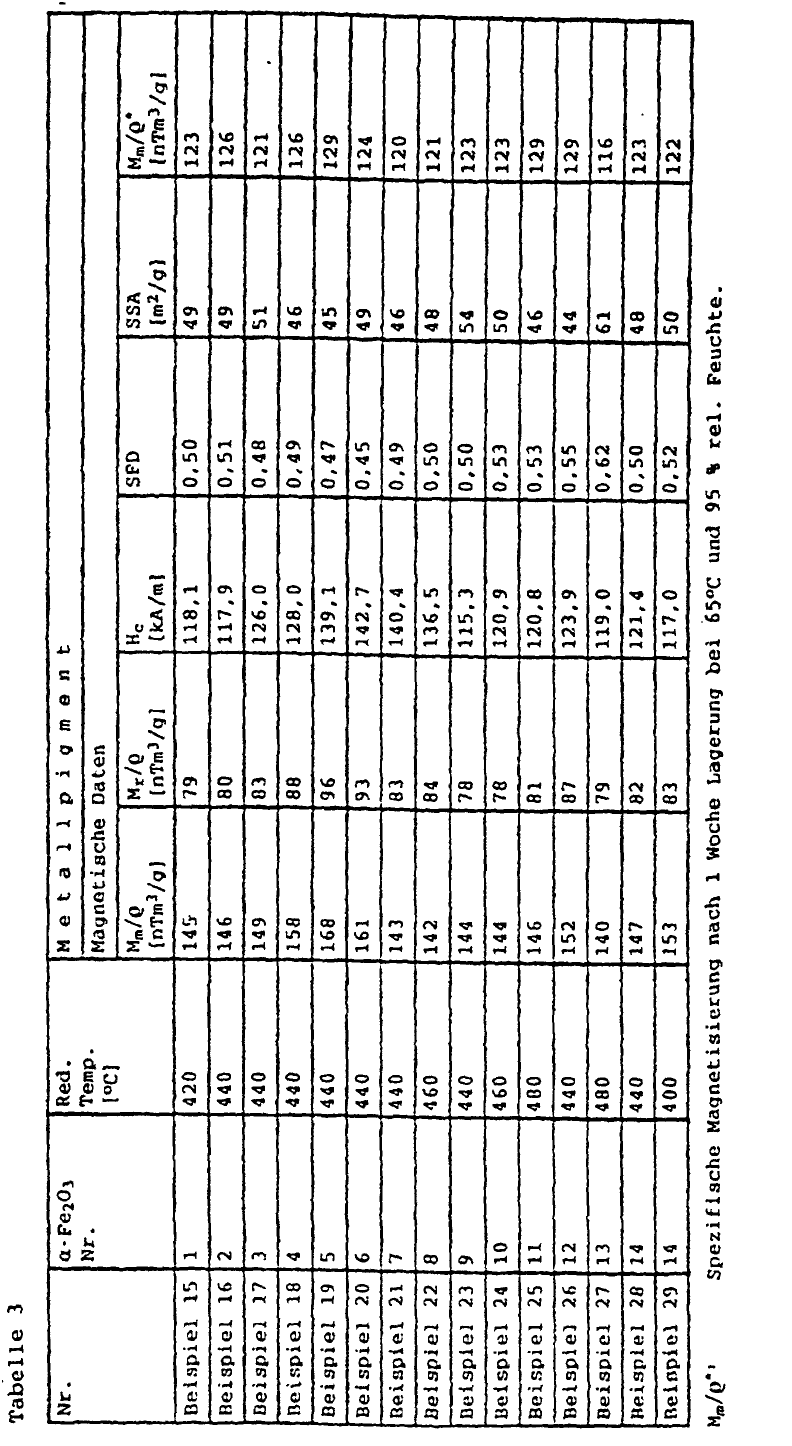

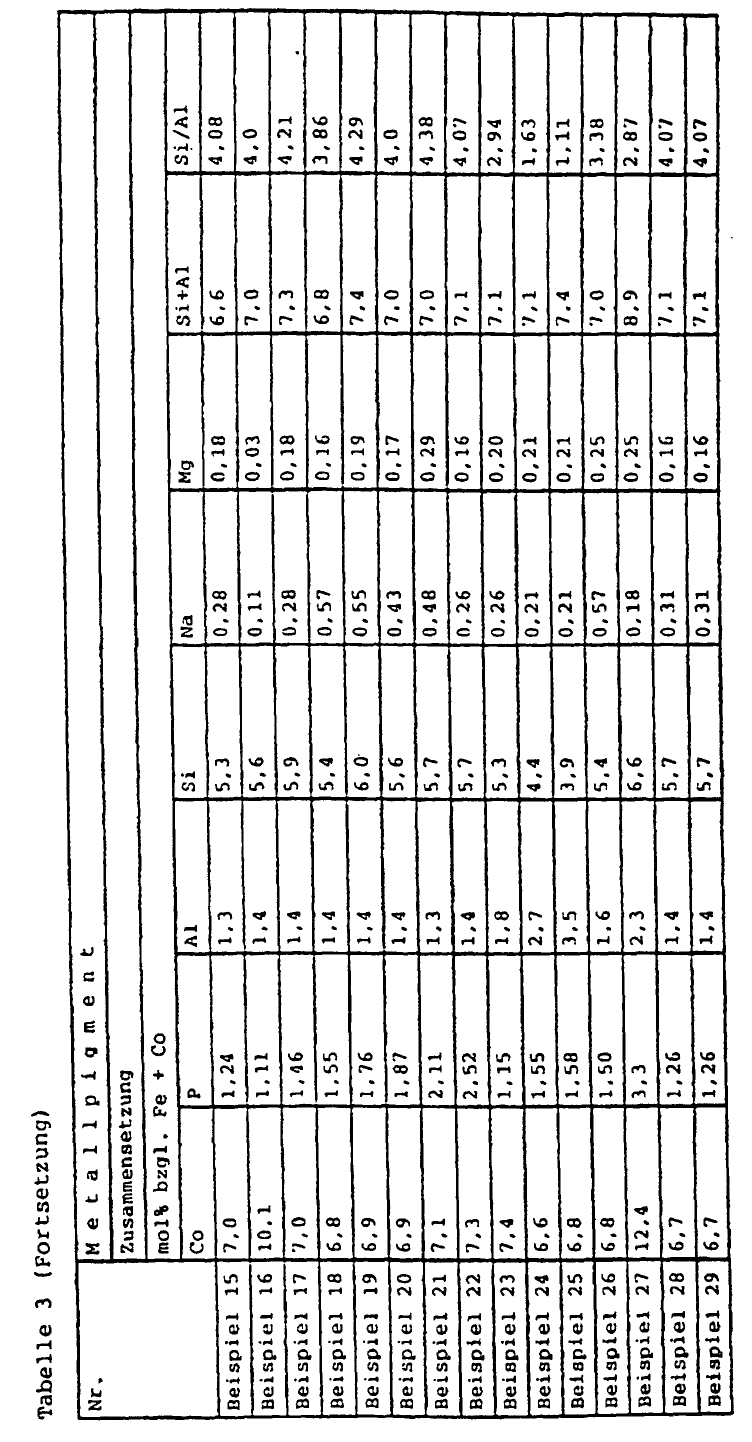

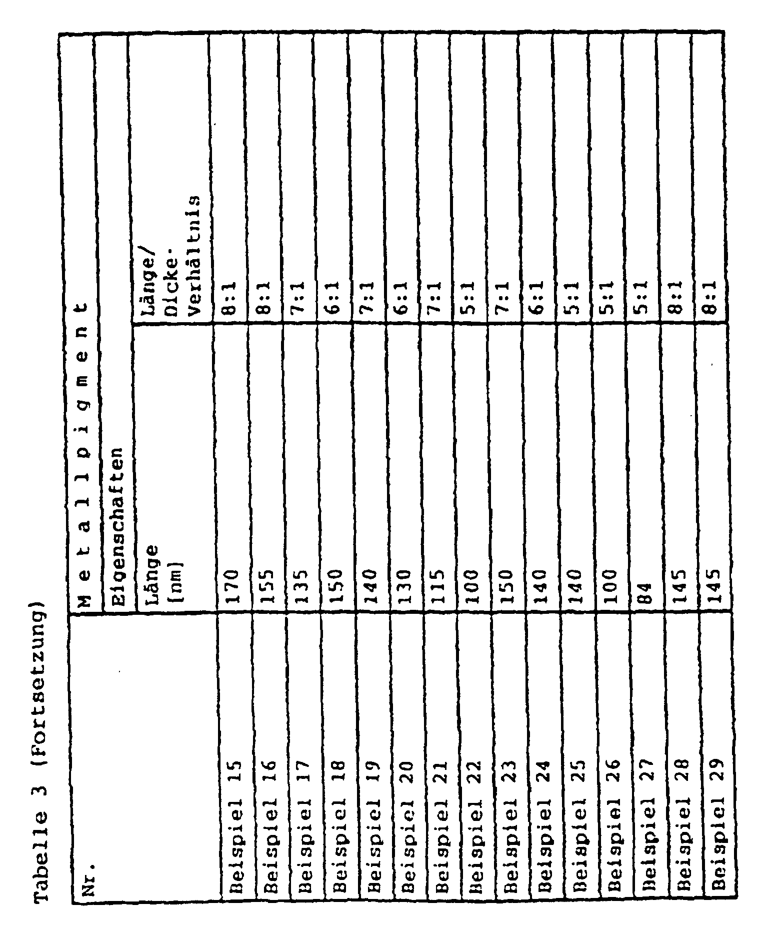

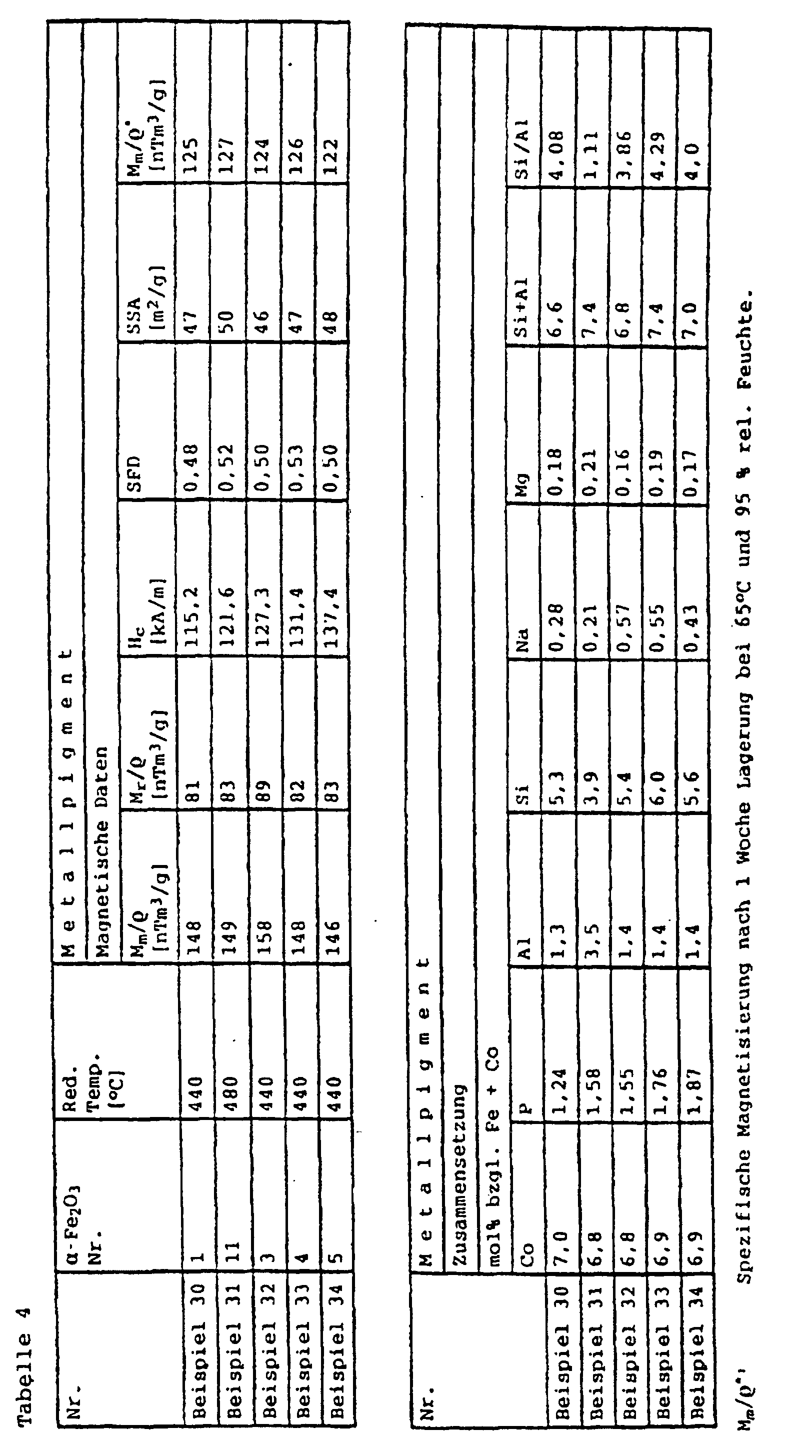

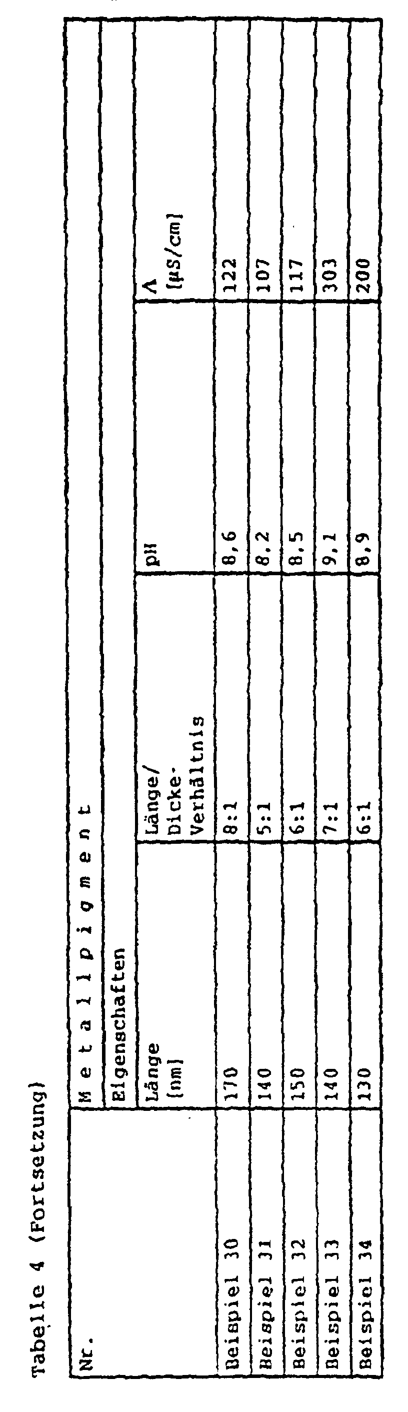

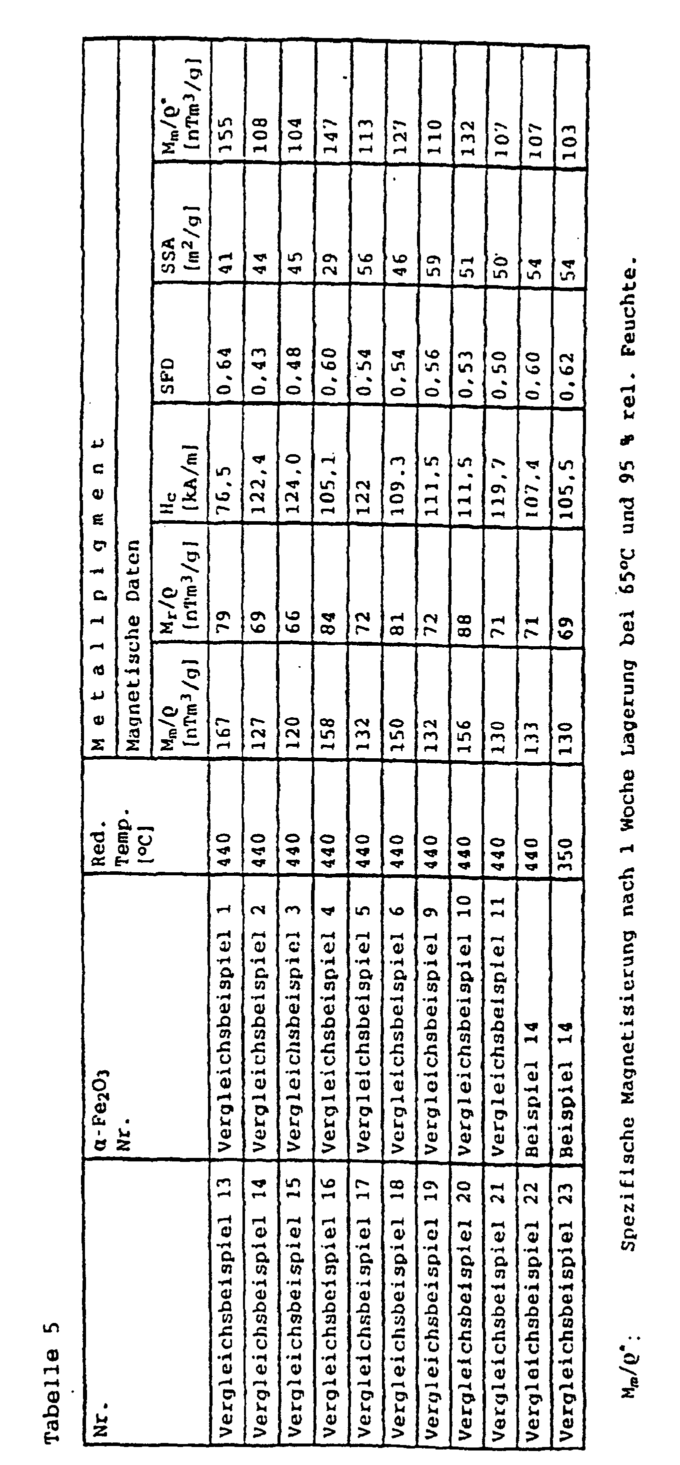

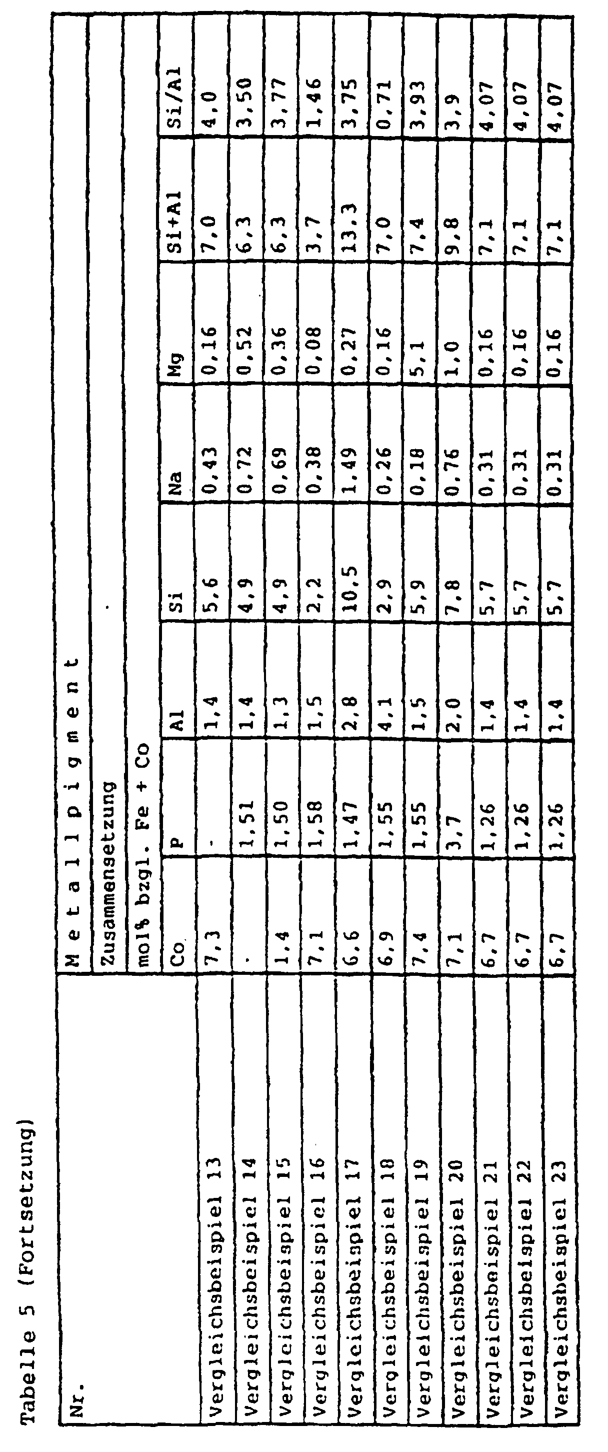

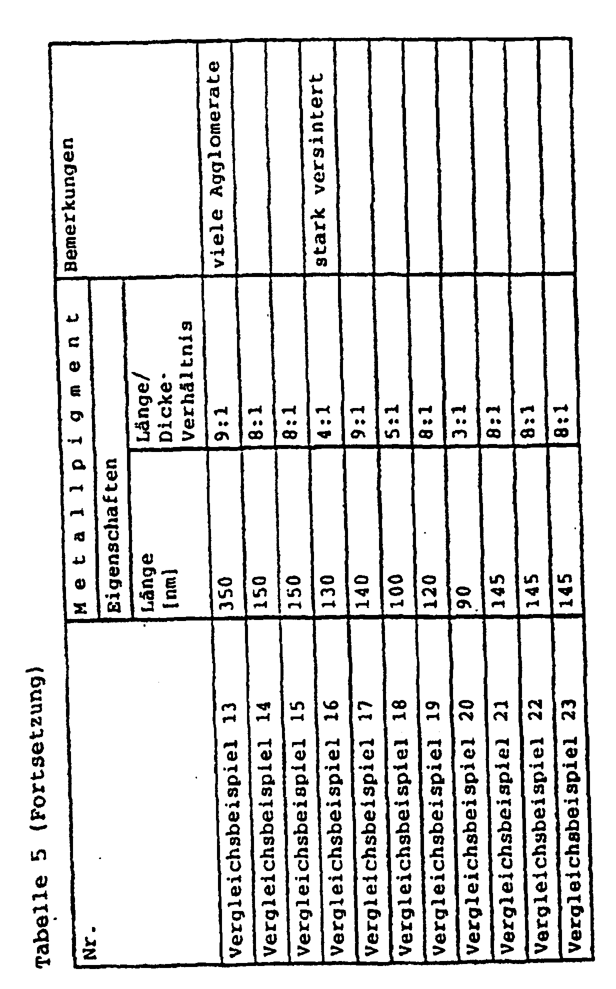

## Patentansprüche

1. Nadelförmige ferromagnetische, eisen- und cobalthaltige Pigmente, enthaltend pro 100 mol der molaren Summe aus Eisen und Cobalt
5 bis 20 mol Cobalt,
1 bis 5 mol Aluminium,
3 bis 10 mol Silicium
0,7 bis 3,5 mol Phosphor,
0,01 bis 1 mol Magnesium,
und Sauerstoff,
wobei die Summe der Gewichtsanteile der Elemente Eisen, Cobalt, Aluminium, Silicium, Phosphor, Magnesium und Sauerstoff 95,1 bis 100 Gew.-% bezogen auf das Gesamtgewicht der Pigmente beträgt.

2. Pigmente nach Anspruch 1, wobei die Summe der Gewichtsanteile von Cobalt und Eisen 65 bis 85 Gew.-% bezogen auf das Gesamtgewicht der Pigmente beträgt.

3. Pigmente nach Anspruch 1 oder 2, wobei das molare Verhältnis von Silizium zu Aluminium mindestens 1 beträgt.

4. Pigmente nach den Ansprüchen 1 bis 3, wobei die molare Summe aus Aluminium und Silizium 4 bis 13 mol pro 100 mol der molaren Summe aus Eisen und Cobalt beträgt.

5. Pigmente nach den Ansprüchen 1 bis 4 enthaltend mindestens ein Alkalimetall.

6. Pigmente nach Anspruch 5 enthaltend 0,02 bis 1 mol Natrium pro 100 Mol der molaren Summe aus Eisen und Cobalt, wobei die Summe der Gewichtsanteile der Elemente Eisen, Cobalt, Magnesium, Aluminium, Silizium, Phosphor, Natrium und Sauerstoff 95,1 bis 100 Gew.-% bezogen auf das Gesamtgewicht der Pigmente beträgt.

7. Pigmente nach den Ansprüchen 1 bis 6 enthaltend Mangan oder Yttrium.

8. Pigmente nach den Ansprüchen 1 bis 7 enthaltend Lanthan oder mindestens ein Element aus der Reihe der Lanthaniden.

9. Pigmente nach den Ansprüchen 1 bis 8 enthaltend Lanthan oder Neodym.

10. Pigmente nach den Ansprüchen 1 bis 9 aus
a) 30 bis 70 Vol-% eines Kerns, der im wesentlichen aus Cobalt und Eisen besteht, und
b) 30 bis 70 Vol-% einer Hülle, die im wesentlichen aus Aluminium, Silizium, Magnesium, Phosphor und Sauerstoff besteht.

11. Pigmente nach den Ansprüchen 1 bis 10, wobei die Pigmente nadelförmig sind und eine durchschnittliche Länge von 50 bis 195 nm und ein Verhältnis der Länge zur durchschnittlichen mittleren Nadeldicke von 3:1 bis 9:1 aufweisen.

12. Pigmente nach den Ansprüchen 1 bis 11 mit einer Koerzitivkraft Hc von über 115 kA/m.

13. Pigmente nach den Ansprüchen 1 bis 12 mit einer Magnetisierung Mm von mindestens 135 nTm³/g bei einer Feldstärke von 400 kA/m.

14. Pigmente nach den Ansprüchen 1 bis 13 mit einem pH-Wert nach EN-ISO 787-9 von 7 bis 10.

15. Pigmente nach den Ansprüchen 1 bis 14 mit einer Leitfähigkeit nach EN-ISO 787-14 von 30 bis 350 µS/cm.

16. Verfahren zur Herstellung der Pigmente gemäß den Ansprüchen 1 bis 15, **dadurch gekennzeichnet, daß** man
a) eine Eisen-(II)-Ionen haltige Lösung in Anwesenheit von Phosphat-Ionen mit einer unterstöchiometrischen Menge einer basischen Alkalimetallverbindung zu Eisen-(II)-hydroxid umsetzt,
b) das Eisen-(II)-hydroxid zu α-FeOOH oxidiert, bis der pH-Wert 4 unterschreitet,
c) die noch in Lösung verbliebenen Eisen-(II)-Ionen zu α-FeOOH oxidiert, wobei mittels einer basischen Alkalimetallverbindung eine Unterschreitung eines pH-Wertes von 4 verhindert wird,
d) eine Cobalt-(II)-Ionen enthaltende Lösung bei einem pH-Wert von 7 bis 10 zugibt,
e) Alkalimetallsilikat-Lösung zugibt,
f) eine Aluminium-Ionen enthaltende Lösung bei einem pH-Wert von 6 bis 10 zugibt,
g) eine Magnesium-Ionen enthaltende Lösung zugibt,
h) den Niederschlag abtrennt, verstrangt, trocknet, bei 700 bis 850°C tempert, bei 380°C bis 520°C mit Wasserstoff reduziert und anschließend mit einem molekularen Sauerstoff enthaltenden Gas passiviert.

17. Verfahren nach Anspruch 16, **dadurch gekennzeichnet, daß** man bei mindestens einem der Schritte a) bis f) mindestens eine 0 Schwefelverbindung zugibt.

18. Verfahren nach Anspruch 17, **dadurch gekennzeichnet, daß** man als Schwefelverbindung Sulfat-Ionen zugibt.

19. Verfahren nach den Ansprüchen 16 bis 18, **dadurch gekennzeichnet, daß** man bei mindestens einem der Schritte a) bis f) mindestens eine Mangan-, Yttrium-, Lanthan- oder Neodymverbindung zugibt.

20. Verwendung der Pigmente gemäß den Ansprüchen 1 bis 19 zur Herstellung von magnetischen Aufzeichnungsmaterialien.

21. Magnetische Aufzeichnungsmaterialien enthaltend ein Pigment gemäß den Ansprüchen 1 bis 20.

## Claims

1. An acicular, ferromagnetic, iron- and cobalt-containing pigment, containing
from 5 to 20 mol of cobalt,
from 1 to 5 mol of aluminum,
from 3 to 10 mol of silicon,
from 0.7 to 3.5 mol of phosphorus,
from 0.01 to 1 mol of magnesium,
and oxygen,
per 100 mol of the molar sum of iron and cobalt, the sum of the amounts per weight of the elements iron, cobalt, aluminum, silicon, phosphorus, magnesium, and oxygen being from 95.1 to 100% by weight, based on the total weight of the pigment.

2. A pigment as claimed in claim 1, wherein the sum of the amounts per weight of the elements iron and cobalt, is from 65 to 85% by weight, based on the total weight of the pigment.

3. A pigment as claimed in any of claims 1 or 2, wherein the molar ratio of silicon to aluminum is at least 1.

4. A pigment as claimed in any of claims 1 to 3, wherein the molar sum of aluminum and silicon is from 4 to 13 mol per 100 mol of the molar sum of iron and cobalt.

5. A pigment as claimed in any of claims 1 to 4, containing at least one alkali metal.

6. A pigment as claimed in claim 5, containing from 0.02 to 1 mol of sodium per 100 mol of the molar sum of iron and cobalt, wherein the sum of the amounts per weight of the elements iron, cobalt, aluminum, silicon, phosphorus, sodium, magnesium, and oxygen is from 95.1 to 100% by weight, based on the total weight of the pigment.

7. A pigment as claimed in any of claims 1 to 6, containing manganese or yttrium.

8. A pigment as claimed in any of claims 1 to 7, containing lanthanum or at least one element from the lanthanide series.

9. A pigment as claimed in any of claims 1 to 8, containing lanthanum or neodymium.

10. A pigment as claimed in any of claims 1 to 9, comprising
a) from 30 to 70 vol % of a core which comprises essentially cobalt and iron and
b) from 30 to 70 vol % of a shell which comprises essentially aluminum, silicon, magnesium, phosphorus and oxygen.

11. A pigment as claimed in any of claims 1 to 10, which is acicular and has an average length of from 50 to 195 nm and a ratio of length to average needle width of from 3:1 to 9:1.

12. A pigment as claimed in any of claims 1 to 11, having a coercive force Hc of more than 115 kA/m.

13. A pigment as claimed in any of claims 1 to 12, having a magnetization Mm of at least 135 nTm³/g at a field strength of 400 kA/m.

14. A pigment as claimed in any of claims 1 to 13, having a pH according to EN-ISO 787-9 of from 7 to 10.

15. A pigment as claimed in any of claims 1 to 14, having a conductivity according to EN-ISO 787-14 of from 30 to 350 µS/cm.

16. A process for the preparation of a pigment as claimed in any of claims 1 to 15, **characterized in that**
a) a solution containing iron(II) ions is reacted in the presence of phosphate ions with a substoichiometric amount of a basic alkali metal compound to give iron(II) hydroxide,
b) the iron(II) hydroxide is oxidized to α-FeOOH until the pH falls below 4,
c) the iron(II) ions still remaining in solution are oxidized to α-FeOOH, the pH being prevented from falling below 4 by means of a basic alkali metal compound,
d) a solution containing cobalt(II) ions is added at a pH of from 7 to 10,
e) an alkali metal silicate solution is added,
f) a solution containing aluminum ions is added at a pH of from 6 to 10,
g) a solution containing magnesium ions is added, and
h) the precipitate is separated off, extruded, dried, heated at 700 to 850 °C, reduced at from 380 to 520 °C with hydrogen and then passivated with a gas containing molecular oxygen.

17. A process as claimed in claim 16, **characterized in that** at least one sulfur containing compound is added in at least one of the steps a) to f).

18. A process as claimed in claim 17, **characterized in that** sulfate ions are added as the sulfur containing compound.

19. A process as claimed in any of claims 16 to 18, **characterized in that** at least one manganese, yttrium, lanthanum or neodymium compound is added in at least one of the steps a) to f).

20. The use of a pigment according to any of claims 1 to 19 for the production of magnetic recording materials.

21. A magnetic recording material containing a pigment as claimed in any of claims 1 to 20.

## Revendications

1. Pigments ferromagnétiques aciculaires contenant du fer et du cobalt et contenant pour 100 moles de la somme molaire du fer et du cobalt
5 à 20 moles de cobalt,
1 à 5 moles d'aluminium,
3 à 10 moles de silicium,
0,7 à 3,5 moles de phosphore,
0,01 à 1 mole de magnésium,
et de l'oxygène,
la somme des pourcentages en poids des éléments fer, cobalt, aluminium, silicium, phosphore, magnésium et oxygène étant comprise entre 95,1 et 100 % en poids, rapportés au poids total des pigments.

2. Pigments selon la revendication 1, dans lesquels la somme des pourcentages en poids du cobalt et du fer est comprise entre 65 et 85 % en poids rapportés au poids total des pigments.

3. Pigments selon la revendication 1 ou 2, dans lesquels le rapport molaire du silicium à l'aluminium est égal à au moins 1.

4. Pigments selon les revendications 1 à 3, dans lesquels la somme molaire de l'aluminium et du silicium est comprise entre 4 et 13 moles pour 100 moles de la somme molaire du fer et du cobalt.

5. Pigments selon les revendications 1 à 4, contenant au moins un métal alcalin.

6. Pigments selon la revendication 5, contenant 0,02 à 1 mole de sodium pour 100 moles de la somme molaire du fer et du cobalt, la somme des pourcentages en poids des éléments fer, cobalt, magnésium, aluminium, silicium, phosphore, sodium et oxygène étant comprise entre 95,1 et 100 % en poids rapportés au poids total des pigments.

7. Pigments selon les revendications 1 à 6, contenant du manganèse ou de l'yttrium.

8. Pigments selon les revendications 1 à 7, contenant du lanthane ou au moins un élément de la série des lanthanides.

9. Pigments selon les revendications 1 à 8, contenant du lanthane ou un néodyme

10. Pigments selon les revendications 1 à 9, constitués par
a) 30 à 70 % en volume d'un noyau qui est constitué essentiellement de cobalt et de fer, et
b) 30 à 70 % en volume d'une enveloppe, qui est constituée essentiellement par de l'aluminium, du silicium, du magnésium, du phosphore et de l'oxygène.

11. Pigments selon les revendications 1 à 10, dans lesquels les pigments sont en forme d'aiguilles et possèdent une longueur moyenne comprise entre 50 et 195 nm et un rapport de la longueur à l'épaisseur médiane moyenne des aiguilles entre 3:1 et 9:1.

12. Pigments selon les revendications 1 à 11, comportant une force coercitive Hc supérieure à 115 kA/m.

13. Pigments selon les revendications 1 à 12, comportant une aimantation Mm égale à au moins 130 nT m³/g pour une intensité de champ de 400 kA/m.

14. Pigments selon les revendications 1à 13, possédant une valeur du pH selon EN-ISO 787-9 comprise entre 7 et 10.

15. Pigments selon les revendications 1 à 14, possédant une conductivité selon EN-ISO 787-14 comprise entre 30 et 300 µS/cm.

16. Procédé pour préparer des pigments conformément aux revendications 1 à 15, **caractérisé en ce que**
a) on transforme une solution contenant des ions fer (II) en présence d'ions phosphate avec une quantité sous-stoechiométrique d'un composé basique d'un métal alcalin en hydroxyde de fer (II),
b) on oxyde l'hydroxyde de fer (II) pour former du α-FeOOH, jusqu'à ce que le pH tombe au-dessous de 4,
c) on oxyde les ions fer α-FEOO (II), qui restent encore dans la solution, en α-FeOOH, un dépassement vers le bas d'une valeur du pH égale à 4 étant empêché au moyen d'un composé basique d'un métal alcalin,
d) on ajoute une solution contenant des ions cobalt (II) pour une valeur du pH comprise entre 7 et 10,
e) on ajoute une solution de silicate de métal alcalin,
f) on ajoute une solution contenant des ions aluminium pour une valeur du pH comprise entre 6 et 10,
g) on ajoute une solution contenant des ions magnésium,
h) on sépare le dépôt, on le divise en écheveaux, on le sèche, on lui applique un recuit entre 700 et 850°C, on le réduit avec de l'hydrogène entre 380° et 520°C et ensuite on lui applique une passivation avec un gaz contenant de l'oxygène moléculaire.

17. Procédé selon la revendication 16, **caractérisé en ce qu'**on lui ajoute, pour au moins l'un des pas a) à f), au moins un composé de soufre.

18. Procédé selon la revendication 17, **caractérisé en ce qu'**on ajoute des ions sulfate en tant que composé de soufre.

19. Procédé selon les revendications 16 à 18, **caractérisé en ce qu'**on ajoute au moins un composé de manganèse, d'ittryum, de lanthane ou de néodyme lors d'au moins l'une des étapes a) à f).

20. Utilisation des pigments selon les revendications 1 à 19, pour produire des matériaux d'enregistrement magnétiques.

21. Matériaux d'enregistrement magnétiques contenant un pigment selon les revendications 1 à 20.
